# EUROPÄISCHE PATENTSCHRIFT

(11) **EP 3 174 740 B1**
(45) Veröffentlichungstag und Bekanntmachung des Hinweises auf die Patenterteilung: **06.06.2018**
(21) Anmeldenummer: 15739636.7
(22) Anmeldetag: 23.07.2015
(51) Int. Cl.: B60C 23/00, B60C 23/04, G07C 5/00

(54) **REIFENÜBERWACHUNGSSYSTEM UND VERFAHREN HIERZU**
TIRE-MONITORING SYSTEM AND METHOD THEREFOR
SYSTÈME DE SURVEILLANCE DE PNEUMATIQUE ET PROCÉDÉ ASSOCIÉ

(30) Priorität: 28.07.2014 DE 102014214769
(43) Veröffentlichungstag der Anmeldung: 07.06.2017
(73) Patentinhaber: Alligator Ventilfabrik GmbH, 89537 Giengen (DE)
(72) Erfinder: MARKERT, Christian, 89542 Herbrechtingen (DE)
(74) Vertreter: Dr. Weitzel & Partner
(86) Internationale Anmeldenummer: PCT/EP2015/066921
(87) Internationale Veröffentlichungsnummer: WO 2016/016099

(56) Entgegenhaltungen:
- EP-A1- 2 287 020
- EP-A2- 1 172 237
- EP-A2- 1 769 948
- US-A1- 2007 210 905

## Beschreibung

Die vorliegende Erfindung betrifft ein Verfahren zur Überwachung eines Reifenluftdruckes und/oder wenigstens einer anderen reifenspezifischen Größe in Reifen eines Fahrzeugs, insbesondere eines Anhängers oder Aufliegers eines Lastkraftwagens, sowie ein Reifenüberwachungssystem zur Überwachung des Reifenluftdruckes und/oder der anderen Größe.

Reifenüberwachungssysteme, wie sie die vorliegende Erfindung betrifft, sind in einer Vielzahl von Ausgestaltungen bekannt. Im Unterschied zu passiven Reifendrucküberwachungssystemen weisen Reifenüberwachungssysteme der gattungsgemäßen Art, die insbesondere auch zur Überwachung eines Reifenluftdruckes herangezogen werden, eine Vielzahl von Reifensensoren auf, die in den Reifen des Fahrzeugs zur Erfassung des dort herrschenden Reifenluftdruckes oder zur Erfassung einer anderen reifenspezifischen Größe, beispielsweise der Temperatur, positioniert sind. Dabei weisen diese Reifensensoren eine Batterie auf, um die in den Reifensensoren vorgesehene Elektronik mit elektrischer Leistung zu versorgen. Verschiedene Maßnahmen sind bekannt, um den Energieverbrauch zu minimieren, beispielsweise indem in einem Ruhezustand der Reifensensor in eine Art Schlafzustand oder Stand-by-Modus geschaltet wird. Aufgrund der Positionierung innerhalb des Luftreifens des Fahrzeugs ist ein Austausch der Batterie nämlich nur mit hohem Aufwand möglich. Hinzu kommt, dass in manchen Reifensensoren die Batterie derart im Inneren eingebettet ist, dass ein Austausch überhaupt nicht möglich ist.

Die Reifensensoren in den Luftreifen weisen Sender auf, welche Signale aussenden, über welche die von ihnen erfasste Größe oder die von ihnen erfassten Größen einem Empfänger im Fahrzeug mitgeteilt werden. Beim Empfänger in dem Fahrzeug stellt sich die Problematik der elektrischen Leistungsversorgung in der Regel nicht, da er herkömmlich einfach an das elektrische Bordnetz des Kraftfahrzeugs angeschlossen wird. Wenn das Kraftfahrzeug gestartet wird, das heißt, wenn das elektrische Bordnetz eingeschaltet wird, kann der Empfänger im Fahrzeug die verschiedenen Reifensensoren abfragen und dem Fahrzeugführer die Messwerte oder bei Bedarf eine Warnung anzeigen. Insoweit arbeiten die Systeme in der Praxis zuverlässig und komfortabel.

Ein Nachteil besteht bei den bekannten Systemen jedoch darin, dass diese nicht spezielle Belange von Spediteuren oder Logistikunternehmen berücksichtigen, deren Geschäftsmodell auf die Bevorratung einer Vielzahl von Anhängern oder Aufliegern beruht, die mit wechselnden Zugmaschinen von wechselnden verantwortlichen Fahrzeugführern transportiert werden. So wird zwar beim Abholen der Anhänger oder Auflieger in der Regel eine Sichtprüfung durchgeführt und auch nach einer Ankopplung an die Zugmaschine kann dem Fahrzeugführer ein kritischer Zustand in einem Luftreifen des Anhängers oder Aufliegers über das Fahrerinformationssystem der Zugmaschine mitgeteilt werden. Jedoch hat der Spediteur oder eine Zentrale beziehungsweise zentrale Servicestellen des Logistik-Unternehmens keinen aktuellen zentralen Zugriff auf alle vorhandenen Anhänger oder Auflieger, wenn diese nicht mit einer Zugmaschine gekoppelt sind.

EP 2 287 020 A1 beschreibt die Möglichkeit, mittels eines mobilen Computers eine Fernabfrage des Reifendruckzustands und einer Reifenidentifikation durchzuführen und für ein Flottenmanagement oder eine Wartungsstelle zur Verfügung zu stellen. Der Flottenmanager erhält demnach einzelne Reifenkennwerte zusammen mit dem Zustand des Reifenluftdruckes und kann, falls erforderlich, Maßnahmen an einen Mechaniker beauftragen.

Zum weiteren Stand der Technik wird verwiesen auf EP 1 769 948 A2, EP 1 172 237 A2 und US 2007/210 905 A1.

Der vorliegenden Erfindung liegt die Aufgabe zugrunde, ein Reifenüberwachungssystem und ein entsprechendes Verfahren der eingangs dargestellten Art derart zu verbessern, dass nahezu jederzeit eine zentrale und/oder automatische Überwachung von Reifenzuständen von Anhängern oder Aufliegern auch in nicht an Zugmaschinen angekoppeltem Zustand möglich ist.

Die erfindungsgemäße Aufgabe wird durch ein Verfahren mit den Merkmalen von Anspruch 1 und ein Reifenüberwachungssystem mit den Merkmalen von Anspruch 8 gelöst. In den abhängigen Ansprüchen sind vorteilhafte Ausgestaltungen der Erfindung angegeben.

Ein erfindungsgemäßes Verfahren zur Überwachung eines Reifenluftdruckes und/oder wenigstens einer anderen reifenspezifischen Größe in Reifen eines Fahrzeugs, insbesondere in Reifen eines Anhängers oder Aufliegers eines Lastkraftwagens, umfasst die folgenden Schritte:
- Erfassen des Reifenluftdruckes und/oder der wenigstens einen anderen reifenspezifischen Größe mit einer Erfassungseinrichtung eines Reifensensors in einem Reifen und Übersenden von Signalen in Abhängigkeit der erfassten Größe mittels eines Senders einer Steuervorrichtung des Reifensensors an einen Router in dem Fahrzeug;
- Empfangen der mittels des Senders gesendeten Signale mittels eines Empfängers des Routers und Speichern der mit den Signalen übermittelten Größen in einem Speicher des Routers; wobei
- der Router während eines Fahrbetriebs des Fahrzeugs über einen elektrischen Leistungsanschluss aus einem elektrischen Bordnetz des Fahrzeugs mit elektrischer Leistung zum Empfangen der Signale und Speichern der Größen versorgt wird; wobei
- der Router außerhalb des Fahrbetriebs des Fahrzeugs bei ausgeschaltetem elektrischen Bordnetz mit elektrischer Leistung aus einem Energiespeicher des Routers versorgt wird, wobei der Energiespeicher über den elektrischen Leistungsanschluss bei eingeschaltetem elektrischen Bordnetz aufladbar ist, und
- zumindest auch bei ausgeschaltetem elektrischen Bordnetz und elektrischer Leistungsversorgung des Routers mit seinem Energiespeicher an einer Schnittstelle des Routers zur drahtgebundenen oder drahtlosen Abfrage der im Speicher gespeicherten Größen eine mobile Kommunikationsvorrichtung zumindest mittelbar angekoppelt wird, welche sich über einen Internetzugang mit einer Datenbank mit routerspezifischen Daten verbindet und eine bidirektionale Datenverbindung mit bidirektionalem Datenaustausch zwischen der Datenbank und dem Router entweder über eine direkte drahtlose Verbindung zwischen dem Router und der Datenbank oder über eine mittelbare Verbindung über die mobile Kommunikationsvorrichtung initiiert.

Besonders vorteilhaft werden über die bidirektionale Datenverbindung zwischen dem Router und der Datenbank in dem Speicher gespeicherte Größen, insbesondere der Reifenluftdruck der verschiedenen Reifen und/oder wenigstens ein Grenzwert für den Reifenluftdruck und/oder für die wenigstens eine andere reifenspezifische Größe an die Datenbank gesendet und bei Vorliegen wenigstens eines aktualisierten Grenzwertes und/oder aktualisierter Software für den Router und/oder die Steuervorrichtung des Reifensensors in der Datenbank wird der aktualisierte Grenzwert und/oder die aktualisierte Software aus der Datenbank zu dem Router übertragen.

Günstig ist, wenn zur Initiierung des bidirektionalen Datenaustausches eine Identifikationskennung des Fahrzeugs, insbesondere das amtliche Zulassungszeichen des Fahrzeugs, eingegeben oder mit der mobilen Kommunikationsvorrichtung erfasst wird und an die Datenbank übersendet wird.

Eine besonders vorteilhafte Ausführungsform der Erfindung sieht vor, dass nach Übersenden der Identifikationskennung des Fahrzeugs an die Datenbank diese die bidirektionale Datenverbindung mit dem Router herstellt oder an die mobile Kommunikationsvorrichtung Zugangsdaten, insbesondere umfassend eine Seriennummer, des Routers übermittelt, mit welchen anschließend eine bidirektionale Datenverbindung zwischen der mobilen Kommunikationsvorrichtung und dem Router hergestellt wird.

Von Vorteil ist vorgesehen, dass der Reifenluftdruck und/oder die wenigstens eine andere reifenspezifische Größe auch bei ausgeschaltetem elektrischen Bordnetz in regelmäßigen oder unregelmäßigen vorgegebenen Intervallen mit der Erfassungseinrichtung des Reifensensors erfasst, mittels des Senders an den Router gesendet und in dem Speicher des Routers gespeichert wird.

Gemäß einer besonders vorteilhaften Ausgestaltung des erfindungsgemäßen Verfahrens ist vorgesehen, dass nach dem Herstellen der bidirektionalen Datenverbindung zwischen dem Router und der Datenbank oder bei oder nach dem Ankoppeln der mobilen Kommunikationsvorrichtung an die Schnittstelle des Routers der Reifenluftdruck und/oder die wenigstens eine andere reifenspezifische Größe mit der Erfassungseinrichtung des Reifensensors erfasst, mittels des Senders an den Router gesendet und in dem Speicher des Routers gespeichert wird.

Beispielsweise können bei einer Ausführungsform der Erfindung Daten und/oder Protokolle einer Sichtprüfung des Fahrzeugs und/oder der Reifen in die mobile Kommunikationsvorrichtung eingegeben oder mit dieser erfasst werden und an die Datenbank übermittelt werden.

Ein erfindungsgemäßes Reifenüberwachungssystem zur Überwachung eines Reifenluftdruckes und/oder wenigstens einer anderen reifenspezifischen Größe in Reifen eines Fahrzeugs weist eine Vielzahl von Reifensensoren zur Positionierung in den Reifen des Fahrzeugs auf, wobei jeder Reifensensor wenigstens eine Erfassungseinrichtung zur Erfassung einer reifenspezifischen Größe, insbesondere des Reifendruckes, und eine Steuervorrichtung mit wenigstens einem Sender zur Übersendung von Signalen in Abhängigkeit der erfassten und insbesondere zusätzlich einer zuvor in der Steuervorrichtung programmierten Größe aufweist. In anderen Worten ist es gemäß einer Ausführungsform nicht nur möglich, direkt oder mittelbar mit dem Reifensensor des Reifenüberwachungssystems eine reifenspezifische Größe in dem Reifen des Fahrzeugs zu erfassen und anschließend über ein von dem zugeordneten Sender erzeugtes Signal zu versenden, sondern es können auch Signale versendet werden, die eine oder mehrere Größen, beispielsweise eine Identifikationsnummer, Maximalwerte oder Minimalwerte (Grenzwerte) oder dergleichen beschreiben oder kodieren, die nicht erfasst wurden, sondern vorher in die Steuervorrichtung einprogrammiert wurden.

Erfindungsgemäß ist wenigstens ein Router zum Einbau in das Fahrzeug vorgesehen, der einen Empfänger zum Empfang der Signale der Vielzahl von Reifensensoren aufweist, einen Speicher zur Speicherung von den mit den Signalen übermittelten Größen der Reifensensoren und eine Schnittstelle zur drahtgebundenen oder drahtlosen Abfrage der gespeicherten Größen umfasst.

Erfindungsgemäß weist der Router einen elektrischen Leistungsanschluss auf, über welchen der Router an ein elektrisches Bordnetz des Fahrzeugs zu seiner Leistungsversorgung anschließbar ist. Darüber hinaus weist der Router erfindungsgemäß jedoch auch einen sozusagen "internen" Energiespeicher auf, der eine elektrische Leistungsversorgung des Routers auch bei abgeschaltetem Bordnetz oder bei einer Trennung des Routers vom Bordnetz zur Verfügung stellt, wobei der Energiespeicher über den elektrischen Leistungsanschluss mittels des Bordnetzes aufladbar ist, wenn eine entsprechende Verbindung wieder hergestellt ist oder das Bordnetz wieder eingeschaltet wurde.

Gemäß einer Ausführungsform der Erfindung ist der Energiespeicher als Superkondensator (Supercap) ausgeführt oder weist wenigstens einen solchen auf. Beispielsweise kann der Superkondensator eine Kapazität von mehr als 1 F (Farad), insbesondere mehr als 3 oder 5 F aufweisen, vorteilhaft mit einer Selbstentladezeit von mehr als einer Woche, insbesondere von mehr als zwei Wochen. Anstelle eines Superkondensators kommt jedoch auch ein Akkumulator oder ein Akkumulatorpack in Betracht, beispielsweise Lithium-Ionen-Akkumulatoren oder auch auf Basis anderer Technologien, beispielsweise Nickel-Metallhydrid. Die Kapazität beträgt vorteilhaft 1000, 1500, 2000, 2500 mAh oder mehr.

Gemäß der erfindungsgemäßen Ausführungsform ist eine mobile Kommunikationsvorrichtung vorgesehen, die mit dem Router über die Schnittstelle drahtgebunden oder drahtlos koppelbar ist, um die im Router gespeicherten Größen abzufragen. Die mobile Kommunikationsvorrichtung kann beispielsweise als Handgerät ausgeführt sein, das sich entsprechend über die Schnittstelle mit dem Router beziehungsweise dessen Steuervorrichtung verbindet, sodass die zuvor erfassten und gespeicherten reifenspezifischen Größen oder die aktuell erfasste und gespeicherte reifenspezifische Größe abgefragt werden kann. Prinzipiell ist es auch möglich, eine aktuelle Größe ohne Zwischenspeicherung abzufragen.

Unter Kopplung der mobilen Kommunikationsvorrichtung mit der Schnittstelle des Routers ist bei der erfindungsgemäßen Vorrichtung und dem Verfahren sowohl eine direkte, das heißt, unmittelbare Kopplung als auch eine indirekte bzw. mittelbare Kopplung zu verstehen. Bei einer mittelbaren Kopplung ist zwischen die Schnittstelle des Routers und die mobile Kommunikationsvorrichtung eine weitere Einrichtung in die Kommunikationsverbindung geschaltet, beispielsweise ein Kommunikationsübersetzer, der einerseits an der Schnittstelle des Routers drahtlos oder drahtverbunden in kommunizierender Verbindung angeschlossen ist und andererseits in drahtloser oder drahtgebundener kommunizierender Verbindung mit der mobilen Kommunikationseinrichtung steht. Beispielsweise verwendet der Router zur Kommunikation mit dem Kommunikationsübersetzer dieselbe Kommunikationstechnik wie zur Kommunikation mit den Reifendrucksensoren, z.B. ISM 434 MHz. Der Kommunikationsübersetzer kann dann insbesondere die mit den Reifendrucksensoren ausgetauschten Daten in einer für mobile Kommunikationseinrichtungen, wie Smarphone, Tablet oder Laptop gebräuchliche Kommunikationstechnologie umsetzen, z.B. USB, Bluetooth oder WLAN.

Die mobile Kommunikationsvorrichtung weist einen Internetzugang auf, über welchen sie, vorteilhaft mit einer Web-Browser unterstützten Datenbank mit reifenspezifischen Daten koppelbar ist. So ist es möglich, dass sich die Kommunikationsvorrichtung, beispielsweise das Handgerät mit einer Internetseite, zum Beispiel über eine App, verbindet und von dieser die Seriennummer des Routers erhält, nachdem eine Identifikationskennung eingegeben beziehungsweise erfasst wurde, beispielsweise das amtliche Zulassungszeichen des Fahrzeugs, das heißt die Ziffern und/oder Zahlen auf dem Nummernschild. Diese Identifikationskennung kann entweder mittels einer Tastatur, die auch als virtuelle Tastatur ausgeführt sein kann, in die mobile Kommunikationsvorrichtung eingegeben werden oder von der mobilen Kommunikationsvorrichtung gescannt werden. Wenn die mobile Kommunikationsvorrichtung beispielsweise die Seriennummer des Routers aus der Datenbank erhalten hat, und/oder nach Eingabe der Identifikationskennung kann eine Anwendung auf der Internetseite den Router beziehungsweise dessen Steuervorrichtung kontaktieren und den Speicher des Routers auslesen, um die letzten empfangenen Daten in einer zentralen Datenbank zu speichern. Selbstverständlich kann diese Speicherung auch in zwei Schritten erfolgen, zunächst durch Speicherung der Daten in der mobilen Kommunikationsvorrichtung und anschließende Übertragung der Daten in die zentrale Datenbank. Durch diese Verbindung mit der zentralen Datenbank ist es auch möglich, neue Werte, insbesondere Grenzwerte, in den Speicher des Routers zu schreiben, die für den künftigen Fahrbetrieb gelten sollen.

Gemäß einer Ausführung der Erfindung empfängt der Router auch im abgestellten Zustand des Fahrzeugs zumindest in Intervallen Signale mit reifenspezifischen Größen von den Reifensensoren in den Reifen des Fahrzeugs. Hierbei kann ein Abfragen durch den Router oder ein selbständiges Senden durch die Reifensensoren vorgesehen sein. Aufgrund seines internen Energiespeichers kann der Router auch im abgestellten Zustand des Fahrzeugs diese empfangenen Größen speichern, bis der interne Energiespeicher vollständig entladen ist. Aufgrund der Kapazität des internen Energiespeichers wird eine solche vollständige Entladung jedoch erst nach Wochen eintreten, und in der Regel überhaupt nicht, weil zuvor ein mit dem erfindungsgemäßen Reifenüberwachungssystem ausgerüsteter Anhänger oder Auflieger wieder an eine Zugmaschine angekoppelt und mit Strom versorgt wird, sodass das elektrische Bordnetz den internen Energiespeicher des Routers wieder auflädt.

Gemäß einer Ausführungsform der Erfindung kann mit der mobilen Kommunikationsvorrichtung ein Protokoll der Sichtprüfung eingegeben werden, das an die zentrale Datenbank gesendet und/oder im Router gespeichert wird.

Mit dem erfindungsgemäßen Reifenüberwachungssystem ist somit eine komfortable und lückenlose sowie zentrale Überwachung der reifenspezifischen Größen einer Vielzahl von Fahrzeugen, insbesondere Anhängern oder Aufliegern möglich, auch wenn diese sich nicht in einem Zustand mit gerade eingeschaltetem elektrischen Bordnetz befinden.

Ein Anhänger oder Auflieger für ein Kraftfahrzeug mit einem erfindungsgemäßen Reifenüberwachungssystem weist vorteilhaft eine mechanische Kupplung zum Ankuppeln an eine Zugmaschine sowie ein elektrisches Bordnetz auf. Ferner ist eine elektrische Kupplung für das elektrische Bordnetz vorgesehen, die zur Leistungsversorgung des elektrischen Bordnetzes an ein elektrisches Bordnetz einer Zugmaschine ankuppelbar ist.

Ferner ist eine Vielzahl von Luftreifen vorgesehen, mit jeweils wenigstens einem entsprechenden Reifensensor.

Vorteilhaft ist ein Reifenüberwachungssystem der eingangs dargestellten Art im Anhänger oder Auflieger eingebaut, wobei der Router mit seinem elektrischen Leistungsanschluss am elektrischen Bordnetz des Anhängers angeschlossen ist.

Gemäß einer Ausführungsform des erfindungsgemäßen Verfahrens werden die aus dem Speicher ausgelesenen Größen, nachdem sich die mobile Kommunikationsvorrichtung nach Eingabe einer das Fahrzeug identifizierenden Kennung über ihren Internetzugang mit der Datenbank mit routerspezifischen Daten verbindet, an die Datenbank übersendet. Vorteilhaft werden durch die mobile Kommunikationsvorrichtung auch Daten durch die durch einen Nutzer zu betätigenden Eingabevorrichtung erfasst und an die Datenbank übersendet, beispielsweise das zuvor genannte Protokoll der Sichtprüfung.

Die Erfindung soll nachfolgend anhand eines Ausführungsbeispiels und den Figuren exemplarisch beschrieben werden.

Es zeigen:
- Figur 1: eine schematische Darstellung eines Aufliegers mit einem erfindungsgemäßen Reifenüberwachungssystem;
- Figur 2: eine schematische Darstellung verschiedener Komponenten des Reifenüberwach ungssystems.

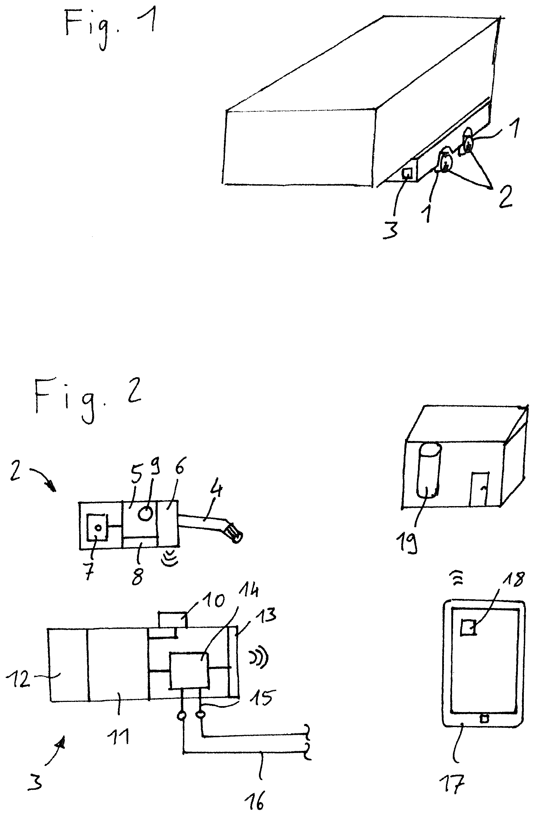

In der Figur 1 ist schematisch ein Auflieger dargestellt, in dessen Reifen 1 jeweils ein Reifensensor 2 positioniert ist. Jeder Reifensensor 2 erfasst beispielsweise den Luftdruck innerhalb des Reifens 1 und gegebenenfalls weitere Größen, beispielsweise die Temperatur, die Drehrichtung und/oder die Beschleunigung.

Im Auflieger ist ferner ein Router 3 außerhalb der umlaufenden Reifen 2 vorgesehen, der mit den Reifensensoren 2 in den Reifen 1 zusammenarbeitet und Signale von den Reifensensoren 2 empfängt, welche von den Reifensensoren 2 erfasste reifenspezifische Größen beinhalten.

In der Figur 2 ist nun, wiederum sehr schematisch, der Aufbau der Reifensensoren 2 und des Routers 3 exemplarisch dargestellt. Die Reifensensoren 2 sind beispielsweise am Luftventil 4 des jeweiligen Reifens angeschlossen, wobei jedoch auch eine Positionierung im jeweiligen Reifen unabhängig vom Luftventil 4 möglich ist, und weisen neben einer Steuervorrichtung 5 einen Sender 6 zur Übersendung von Signalen an den Router 3 auf. Die Reifensensoren 2 weisen ferner wenigstens eine Erfassungseinrichtung 7 auf, die beispielsweise den zuvor schon genannten Luftdruck im Reifen erfasst. Auch kann ein Speicher 8 vorgesehen sein, welcher erfasste reifenspezifische Größen oder von außen einprogrammierte Größen speichert.

Schließlich weist jeder Reifensensor 2 einen Energiespeicher 9 auf, der insbesondere in Form einer Batterie ausgeführt ist, die in der Regel nicht wieder aufladbar ist.

Die mittels des Senders 6 gesteuert durch die Steuervorrichtung 5 übersendeten Signale der Reifensensoren 2 werden vom Empfänger 10 des Routers 3 empfangen, durch die Steuervorrichtung 11 des Routers 3 verarbeitet und in dem Speicher 12 des Routers 3 gespeichert. Ferner weist der Router 3 eine Schnittstelle 13 zur drahtgebundenen oder drahtlosen, hier drahtlosen, Abfrage der gespeicherten Größen auf. Die Schnittstelle 13 kann beispielsweis als WLAN-Schnittstelle, Infrarot-Schnittstelle oder Bluetooth-Schnittstelle oder auch als Mobilfunk-Schnittstelle ausgeführt sein.

Der Router 3 weist einen Energiespeicher 14 auf, der den Betrieb des Routers 3 auch dann aufrecht erhält, wenn der Router 3 nicht mit seinem elektrischen Leistungsanschluss 15 am elektrischen Bordnetz 16 des Aufliegers angeschlossen ist beziehungsweise wenn das elektrische Bordnetz 16 bei abgestelltem Auflieger von der Zugmaschine abgetrennt abgeschaltet ist. Der Energiespeicher ist über den elektrischen Leistungsanschluss 15 mit elektrischer Leistung aus dem Bordnetz 16 wieder aufladbar.

Mit einer mobilen Kommunikationsvorrichtung 17, beispielsweise einem Tablet-Computer oder einem Smartphone, kann der Router 3 adressiert werden, um eine Verbindung zwischen der mobilen Kommunikationsvorrichtung 17 und dem Router 3 beziehungsweise dessen Steuervorrichtung 11 über die Schnittstelle 13 herzustellen. Bei einer hergestellten unidirektionalen oder vorteilhaften bidirektionalen Verbindung zwischen dem Router 3 und der mobilen Kommunikationsvorrichtung 17 ist es nun möglich, Daten aus dem Speicher 12 des Routers 3 auszulesen, somit zuvor von den Reifensensoren 2 übermittelten reifenspezifische Größen. Vorteilhaft ist es möglich, auch Daten in den Speicher 12 zu schreiben, insbesondere damit diese anschließend in die Reifensensoren 2 übertragen werden.

Die mobile Kommunikationsvorrichtung 17 verbindet sich nicht nur mit dem Router 3, sondern zugleich über einen Internetzugang, beispielsweise die hier dargestellte App 18, mit einer zentralen Datenbank 19. Diese zentrale Datenbank 19, die beispielsweise eine Internetseite zur Verfügung stellt, kann sich nun über die mobile Kommunikationsvorrichtung 17 oder auch direkt über die Schnittstelle 13, wenn diese entsprechend eingerichtet ist, mit der Steuervorrichtung 11 des Routers 3 verbinden, um Daten aus dem Speicher 12 auszulesen oder in diesen zu schreiben. Bei der zwischengeschalteten mobilen Kommunikationsvorrichtung 17 können die Daten aus dem Speicher 12 auch erst auf die mobile Kommunikationsvorrichtung 17 und anschließend zur Datenbank 19 übertragen werden und umgekehrt.

Somit ist es möglich, reifenspezifische Größen aus einer Vielzahl von Aufliegern gemäß der Figur 1 oder Anhängern oder auch Fahrzeugen anderer Art mittels der Datenbank 19 zentral zu überwachen und zu verwalten, auch wenn die Router 3 an keine aktive externe Leistungsversorgung angeschlossen sind.

Ferner ist es möglich, auch Sichtprüfungen durchzuführen und entsprechende Daten oder Protokolle mittels der mobilen Kommunikationsvorrichtung 17 an die Datenbank 19 zu übermitteln.

## Patentansprüche

1. Verfahren zur Überwachung eines Reifenluftdruckes und/oder wenigstens einer anderen reifenspezifischen Größe in Reifen (1) eines Fahrzeugs, insbesondere eines Anhängers oder Aufliegers eines Lastkraftwagens, mit den folgenden Schritten:
1.1 Erfassen des Reifenluftdruckes und/oder der wenigstens einen anderen reifenspezifischen Größe mit einer Erfassungseinrichtung (7) eines Reifensensors (2) in einem Reifen (1) und Übersenden von Signalen in Abhängigkeit der erfassten Größe mittels eines Senders (6) einer Steuervorrichtung (5) des Reifensensors (2) an einen Router (3) in dem Fahrzeug;
1.2 Empfangen der mittels des Senders (6) gesendeten Signale mittels eines Empfängers (10) des Routers (3) und Speichern der mit den Signalen übermittelten Größen in einem Speicher (12) des Routers (3); wobei
1.3 der Router (3) während eines Fahrbetriebs des Fahrzeugs über einen elektrischen Leistungsanschluss (15) aus einem elektrischen Bordnetz (16) des Fahrzeugs mit elektrischer Leistung zum Empfangen der Signale und Speichern der Größen versorgt wird;
**dadurch gekennzeichnet, dass**
1.4 der Router (3) außerhalb des Fahrbetriebs des Fahrzeugs bei ausgeschaltetem elektrischen Bordnetz (16) mit elektrischer Leistung aus einem Energiespeicher (14) des Routers (3) versorgt wird, wobei der Energiespeicher (14) über den elektrischen Leistungsanschluss (15) bei eingeschaltetem elektrischen Bordnetz (16) aufladbar ist, und
1.5 zumindest auch bei ausgeschaltetem elektrischen Bordnetz (16) und elektrischer Leistungsversorgung des Routers (3) mit seinem Energiespeicher (14) an einer Schnittstelle (13) des Routers (3) zur drahtgebundenen oder drahtlosen Abfrage der im Speicher (12) gespeicherten Größen eine mobile Kommunikationsvorrichtung (17) zumindest mittelbar angekoppelt wird, welche sich über einen Internetzugang mit einer Datenbank (19) mit routerspezifischen Daten verbindet und eine bidirektionale Datenverbindung mit bidirektionalem Datenaustausch zwischen der Datenbank (19) und dem Router (3) entweder über eine direkte drahtlose Verbindung zwischen dem Router (3) und der Datenbank (19) oder über eine mittelbare Verbindung über die mobile Kommunikationsvorrichtung (17) initiiert.

2. Verfahren gemäß Anspruch 1, **dadurch gekennzeichnet, dass** über die bidirektionale Datenverbindung zwischen dem Router (3) und der Datenbank (19) in dem Speicher (12) gespeicherte Größen, insbesondere der Reifenluftdruck der verschiedenen Reifen (1) und/oder wenigstens ein Grenzwert für den Reifenluftdruck und/oder für die wenigstens eine andere reifenspezifische Größe an die Datenbank (19) gesendet werden und bei Vorliegen wenigstens eines aktualisierten Grenzwertes und/oder aktualisierter Software für den Router (3) und/oder die Steuervorrichtung (5) des Reifensensors (2) in der Datenbank (19) der aktualisierte Grenzwert und/oder die aktualisierte Software aus der Datenbank (19) zu dem Router (3) übertragen wird.

3. Verfahren gemäß einem der Ansprüche 1 oder 2, **dadurch gekennzeichnet, dass** zur Initiierung des bidirektionalen Datenaustausches eine Identifikationskennung des Fahrzeugs, insbesondere das amtliche Zulassungszeichen des Fahrzeugs, eingegeben oder mit der mobilen Kommunikationsvorrichtung (17) erfasst wird und an die Datenbank (19) übersendet wird.

4. Verfahren gemäß Anspruch 3, **dadurch gekennzeichnet, dass** nach Übersenden der Identifikationskennung des Fahrzeugs an die Datenbank (19) diese die bidirektionale Datenverbindung mit dem Router (3) herstellt oder an die mobile Kommunikationsvorrichtung (17) Zugangsdaten, insbesondere umfassend eine Seriennummer, des Routers (3) übermittelt, mit welchen anschließend eine bidirektionale Datenverbindung zwischen der mobilen Kommunikationsvorrichtung (17) und dem Router (3) hergestellt wird.

5. Verfahren gemäß einem der Ansprüche 1 bis 4, **dadurch gekennzeichnet, dass** der Reifenluftdruck und/oder die wenigstens eine andere reifenspezifische Größe auch bei ausgeschaltetem elektrischen Bordnetz (16) in regelmäßigen oder unregelmäßigen vorgegebenen Intervallen mit der Erfassungseinrichtung (7) des Reifensensors (2) erfasst, mittels des Senders (6) an den Router (3) gesendet und in dem Speicher (12) des Routers (3) gespeichert wird.

6. Verfahren gemäß einem der Ansprüche 1 bis 5, **dadurch gekennzeichnet, dass** nach dem Herstellen der bidirektionalen Datenverbindung zwischen dem Router (3) und der Datenbank (19) oder bei oder nach dem Ankoppeln der mobilen Kommunikationsvorrichtung (17) an die Schnittstelle (13) des Routers (3) der Reifenluftdruck und/oder die wenigstens eine andere reifenspezifische Größe mit der Erfassungseinrichtung (7) des Reifensensors (2) erfasst, mittels des Senders (6) an den Router (3) gesendet und in dem Speicher (12) des Routers (3) gespeichert wird.

7. Verfahren gemäß einem der Ansprüche 1 bis 6, **dadurch gekennzeichnet, dass** die Daten und/oder Protokolle einer Sichtprüfung des Fahrzeugs und/oder der Reifen (1) in die mobile Kommunikationsvorrichtung (17) eingegeben oder mit dieser erfasst werden und an die Datenbank (19) übermittelt werden.

8. Reifenüberwachungssystem zur Überwachung eines Reifenluftdruckes und/oder wenigstens einer anderen reifenspezifischen Größe in Reifen (1) eines Fahrzeugs, insbesondere Anhängers oder Aufliegers eines Lastkraftwagens;
8.1 mit einer Vielzahl von Reifensensoren (2) zur Positionierung in den Reifen (1) des Fahrzeugs; wobei
8.2 jeder Reifensensor (2) wenigstens eine Erfassungseinrichtung (7) zur Erfassung einer reifenspezifischen Größe und eine Steuervorrichtung (5) mit wenigstens einem Sender (6) zur Übersendung von Signalen in Abhängigkeit der erfassten Größe umfasst;
8.3 mit einem Router (3) zum Einbau in das Fahrzeug, der einen Empfänger (10) zum Empfangen der Signale der Vielzahl von Reifensensoren (2), einen Speicher (12) zur Speicherung von den mit den Signalen übermittelten Größen der Reifensensoren (2) und eine Schnittstelle (13) zur drahtgebundenen oder drahtlosen Abfrage der gespeicherten Größen umfasst; wobei
8.4 der Router (3) einen elektrischen Leistungsanschluss (15) aufweist, über welchen der Router (3) an ein elektrisches Bordnetz (16) zu seiner Leistungsversorgung anschließbar ist; und
8.5 der Router (3) einen Energiespeicher (14) aufweist, der eine elektrische Leistungsversorgung bei abgeschaltetem Bordnetz (16) zur Verfügung stellt und über den elektrischen Leistungsanschluss (15) aufladbar ist;
8.6 mit einer mobilen Kommunikationsvorrichtung (17), die an die Schnittstelle (13) des Routers (3) ankoppelbar ist;
**dadurch gekennzeichnet, dass**
8.7 die mobile Kommunikationsvorrichtung (17) einen Internetzugang aufweist, über welchen sie mit einer Datenbank (19) mit routerspezifischen Daten koppelbar ist, und eingerichtet ist, ein Verfahren gemäß einem der Ansprüche 1 bis 7 auszuführen.

9. Reifenüberwachungssystem gemäß Anspruch 8, **dadurch gekennzeichnet, dass** die Datenbank (19) eine Web-Browser unterstützende Datenbank ist.

## Claims

1. Method for monitoring a tire air pressure and/or at least one other tire-specific variable in tires (1) of a vehicle, in particular of a trailer or semi-trailer of a truck, comprising the following steps:
1.1 detecting the tire air pressure and/or the at least one other tire-specific variable with a detection device (7) of a tire sensor (2) in a tire (1) and transmitting signals as a function of the detected variable by means of a transmitter (6) of a control device (5) of the tire sensor (2) to a router (3) in the vehicle;
1.2 receiving the signals transmitted by the transmitter (6) by means of a receiver (10) of the router (3) and storing the variables transmitted with the signals in a memory (12) of the router (3); wherein
1.3 the router (3) is supplied with electrical power during driving operation of the vehicle via an electrical power connection (15) from an electrical onboard network (16) of the vehicle for receiving the signals and storing the variables;
**characterized in that**
1.4 the router (3) is supplied with electrical power from an energy storage unit (14) of the router (3) outside the driving operation of the vehicle when the electrical onboard network (16) is switched off, wherein the energy storage unit (14) is rechargeable via the electrical power connection (15) when the electrical onboard network (16) is activated, and
1.5 at least even with switched off electrical onboard network (16) and electrical power supply of the router (3) with its energy storage unit (14) a mobile communication device (17) is coupled at least indirectly to an interface (13) of the router (3) for wired or wireless query of the variables stored in the memory (12), which mobile communication device (17)connects via an internet access to a database (19) with router-specific data and initiates a bidirectional data connection with bidirectional data exchange between the database (19) and the router (3) either via a direct wireless connection between the router (3) and the database (19) or via an indirect connection via the mobile communication device (17).

2. Method according to claim 1, **characterized in that** via the bidirectional data connection between the router (3) and the database (19) variables stored in the memory (12), in particular the tire air pressure of the various tires (1) and/or at least one limit value for the tire air pressure and/or for the at least one other tire-specific variable, are sent to the database (19) and in the presence of at least one updated limit value and/or updated software for the router (3) and/or the control device (5) of the tire sensor (2) in the database (19) the updated limit value and/or the updated software is transferred from the database (19) to the router (3).

3. Method according to one of the claims 1 or 2, **characterized in that** for initiating the bidirectional data exchange, an identification code of the vehicle, in particular the official registration number of the vehicle, is entered or is detected with the mobile communication device (17) and is sent to the database (19).

4. Method according to claim 3, **characterized in that** after sending the identification code of the vehicle to the database (19) it establishes the bidirectional data connection with the router (3) or transmits access data of the router (3), in particular comprising a serial number, to the mobile communication device (17), with which data subsequently a bidirectional data connection is established between the mobile communication device (17) and the router (3).

5. Method according to one of the claims 1 to 4, **characterized in that** the tire air pressure and/or the at least one other tire-specific variable are/is detected with the detection device (7) of the tire sensor (2) at regular or irregular predetermined intervals even when the electrical onboard network (16) is switched off, sent by the transmitter (6) to the router (3) and stored in the memory (12) of the router (3).

6. Method according to one of claims 1 to 5, **characterized in that** after establishing the bidirectional data connection between the router (3) and the database (19) or during or after the coupling of the mobile communication device (17) to the interface (13) of the router (3) the tire air pressure and/or the at least one other tire-specific variable are/is detected by the detection device (7) of the tire sensor (2), sent by the transmitter (6) to the router (3) and stored in the memory (12) of the router (3).

7. Method according to one of claims 1 to 6, **characterized in that** the data and/or logs of a visual inspection of the vehicle and/or the tires (1) are/is entered into or recorded with the mobile communication device (17) and sent to the database (19).

8. Tire monitoring system for monitoring a tire air pressure and/or at least one other tire-specific variable in tires (1) of a vehicle, in particular a trailer or semi-trailer of a truck;
8.1 having a plurality of tire sensors (2) for positioning in the tire (1) of the vehicle; wherein
8.2 each tire sensor (2) comprises at least one detection device (7) for detecting a tire-specific variable and a control device (5) with at least one transmitter (6) for transmitting signals depending on the detected variable;
8.3 having a router (3) for installation in the vehicle, comprising a receiver (10) for receiving the signals of the plurality of tire sensors (2), a memory (12) for storing the variables of the tire sensors (2) transmitted with the signals and an interface (13) for wired or wireless query of the stored variables; wherein
8.4 the router (3) has an electrical power connection (15) via which the router (3) can be connected to an electrical onboard network (16) for its power supply; and
8.5 the router (3) has an energy storage unit (14) providing an electrical power supply when the onboard network (16) is switched off and is rechargeable via the electrical power connection (15);
8.6 having a mobile communication device (17) which can be coupled to the interface (13) of the router (3);
**characterized in that**
8.7 the mobile communication device (17) has an internet access via which it can be coupled to a database (17) with router-specific data, and is adapted to carry out a method according to one of the claims 1 to 7.

9. Tire monitoring system according to claim 8, **characterized in that** the database (19) is a database supporting a web browser.

## Revendications

1. Procédé pour la surveillance d'une pression d'air des pneus et/ou d'au moins une autre grandeur spécifique des pneus dans des pneus (1) d'un véhicule, en particulier d'une remorque de poids lourd, comportant les étapes suivantes :
1.1 détection de la pression d'air des pneus et/ou de l'au moins une autre grandeur spécifique des pneus avec un dispositif de détection (7) d'un capteur de pneu (2) dans un pneu (1) et transmission de signaux en fonction de la grandeur détectée au moyen d'un émetteur (6) d'un dispositif de commande (5) du capteur de pneu (2) à un routeur (3) à bord du véhicule ;
1.2 réception des signaux émis au moyen de l'émetteur (6) au moyen d'un récepteur (10) du routeur (3) et enregistrement des grandeurs transmises avec les signaux dans une mémoire (12) du routeur (3),
1.3 le routeur (3) étant alimenté en puissance électrique, quand le véhicule roule, par une connexion de puissance électrique (15) à partir d'un réseau de bord électrique (16) du véhicule en vue de la réception des signaux et de l'enregistrement des grandeurs ;
**caractérisé en ce que**
1.4 quand le véhicule ne roule pas et que le réseau de bord électrique (16) est hors circuit, le routeur (3) est alimenté en puissance électrique par un accumulateur d'énergie (14) du routeur (3), lequel accumulateur d'énergie (14) peut être rechargé par la connexion de puissance électrique (15) quand le réseau de bord électrique (16) est en circuit et
1.5 au moins également quand le réseau de bord électrique (16) est hors circuit et le routeur (3) alimenté par son accumulateur d'énergie (14), un dispositif de communication mobile (17) peut être couplé au moins indirectement à une interface (13) du routeur (3) pour la consultation filaire ou sans fil des données enregistrées dans la mémoire (12) et se connecte par un accès à Internet à une banque de données (19) contenant des données spécifiques du routeur et établit un échange de données bidirectionnel avec échange de données bidirectionnel entre la banque de données (19) et le routeur (3), soit par une connexion filaire directe entre le routeur (3) et la banque de données (19), soit par une connexion indirecte via le dispositif de communication mobile (17).

2. Procédé selon la revendication 1, **caractérisé en ce que** des grandeurs enregistrées dans la mémoire (12), en particulier la pression d'air des différents pneus (1) et/ou au moins une valeur limite de la pression d'air des pneus et/ou de l'au moins une autre grandeur spécifique des pneus, sont transmises à la banque de données (19) par la liaison de données bidirectionnelle entre le routeur (3) et la banque de données (19) et, s'il existe au moins une valeur limite actualisée et/ou un logiciel actualisé pour le routeur (3) et/ou le dispositif de commande (5) du capteur de pneu (2) dans la banque de données (19), la valeur limite actualisée et/ou le logiciel actualisé sont transmis de la banque de données (19) au routeur (3).

3. Procédé selon l'une des revendications 1 ou 2, **caractérisé en ce qu'**afin de lancer l'échange bidirectionnel de données, un identifiant du véhicule, en particulier le numéro d'immatriculation du véhicule, est entré ou saisi avec le dispositif de communication mobile (17) et transmis à la banque de données (19).

4. Procédé selon la revendication 3, **caractérisé en ce qu'**après l'envoi de l'identifiant du véhicule à la banque de données (19), celle-ci établit la liaison de données bidirectionnelle avec le routeur (3) ou transmet au dispositif de communication mobile (17) des données d'accès, comprenant en particulier le numéro de série, du routeur (3) avec lequel une liaison de données bidirectionnelle est ensuite établie entre le dispositif de communication mobile (17) et le routeur (3).

5. Procédé selon l'une des revendications 1 à 4, **caractérisé en ce que** la pression d'air des pneus et/ou l'au moins une autre grandeur spécifique des pneus sont détectées même quand le réseau de bord électrique (16) est hors circuit, à intervalles réguliers ou irréguliers prédéfinis, par le dispositif de détection (7) du capteur de pneu (2), transmises au routeur (3) au moyen de l'émetteur (6) et enregistrées dans la mémoire (12) du routeur (3).

6. Procédé selon l'une des revendications 1 à 5, **caractérisé en ce qu'**après l'établissement de la liaison de données bidirectionnelle entre le routeur (3) et la banque de données (19) ou pendant ou après le couplage du dispositif de communication mobile (17) à l'interface (13) du routeur (3), la pression d'air des pneus et/ou l'au moins une autre grandeur spécifique des pneus sont détectées avec le dispositif de détection (7) du capteur de pneu (2), transmises au routeur (3) au moyen de l'émetteur (6) et enregistrées dans la mémoire (12) du routeur (3).

7. Procédé selon l'une des revendications 1 à 6, **caractérisé en ce que** les données et/ou comptes-rendus d'un contrôle visuel du véhicule et/ou des pneus (1) sont entrées dans le dispositif de communication mobile (17) ou saisies avec celui-ci et transmises à la banque de données (19).

8. Système de surveillance de pneus pour la surveillance d'une pression d'air des pneus et/ou d'au moins une autre grandeur spécifique des pneus dans des pneus (1) d'un véhicule, en particulier d'une remorque d'un poids lourd,
8.1 avec plusieurs capteurs de pneu (2) à placer dans les pneus (1) du véhicule,
8.2 chaque capteur de pneu (2) comprenant au moins un dispositif de détection (7) pour la détection d'une grandeur spécifique des pneus et un dispositif de commande (5) avec au moins un émetteur (6) pour transmettre des signaux en fonction de la grandeur saisie ;
8.3 avec un routeur (3) à installer dans le véhicule qui comprend un récepteur (10) pour la réception des signaux des plusieurs capteurs de pneu (2), une mémoire (12) pour l'enregistrement des grandeurs des capteurs de pneu (2) transmis avec les signaux et une interface (13) pour la consultation filaire ou sans fil des grandeurs enregistrées,
8.4 le routeur (3) comprenant une connexion de puissance électrique (15) par laquelle le routeur (3) peut être connecté au réseau de bord électrique (16) pour être alimenté en énergie et
8.5 le routeur (3) comprenant un accumulateur d'énergie (14) qui fournit une alimentation en énergie quand le réseau de bord (16) est hors circuit et qui peut être rechargé par la connexion de puissance électrique (15) ;
8.6 avec un dispositif de communication mobile (17) qui peut être couplé à l'interface (13) du routeur (3) ;
**caractérisé en ce que**
8.7 le dispositif de communication mobile (17) présente un accès à Internet par lequel il peut être couplé à une banque de données (19) et est configuré pour exécuter un procédé selon l'une des revendications 1 à 7.

9. Système de surveillance des pneus selon la revendication 8, **caractérisé en ce que** la banque de données (19) est une banque de données pouvant prendre en charge un navigateur Web.
